# EUROPEAN PATENT SPECIFICATION

(11) **EP 2 960 783 B1**
(45) Date of publication and mention of the grant of the patent: **23.10.2019**
(21) Application number: 15173278.1
(22) Date of filing: 23.06.2015
(51) Int. Cl.: G06F 8/61, G06F 3/0482, G06F 3/0481, G06F 3/0488, G06F 3/0486

(54) **MOBILE TERMINAL AND METHOD FOR CONTROLLING THE SAME**
TRAGBARES ENDGERÄT UND VERFAHREN ZUR STEUERUNG DAVON
TERMINAL MOBILE ET SON PROCEDE DE COMMANDE

(30) Priority: 27.06.2014 KR 20140079484
(43) Date of publication of application: 30.12.2015
(73) Proprietor: LG Electronics Inc., Yeongdeungpo-gu Seoul 150-721 (KR)
(72) Inventor: PARK, Mihyun, 137-893 SEOUL (KR); HAN, Dongsu, 137-893 SEOUL (KR); SHIN, Woohyoung, 137-893 SEOUL (KR); KIM, Seonghyok, 137-893 SEOUL (KR); WOO, Sungho, 137-893 SEOUL (KR)
(74) Representative: Cabinet Plasseraud

(56) References cited:
- WO-A1-2014/035931
- US-A1- 2007 118 813
- US-A1- 2011 307 810

## Description

### BACKGROUND OF THE DISCLOSURE

### Field of the Disclosure

The present invention relates to a mobile terminal and a method for controlling the same to enable convenient installation of applications.

### Background of the Disclosure

Terminals may be generally classified as mobile/portable terminals or stationary terminals. Mobile terminals may also be classified as handheld terminals or vehicle mounted terminals. Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

In the meantime, as applications that can be used in a terminal are frequently installed, it is necessary to conveniently determine an application installation position in the terminal. US2011/307810 discloses means to allow users to install applications onto desktop pages of user interfaces. US2007/118813 discloses methods of managing icons displayed on a screen of a user interface. WO2014/035931 discloses methods of configuring user interfaces so as to brand them for an organization.

### SUMMARY OF THE DISCLOSURE

Accordingly, an object of the present invention is to address the above-noted and other problems.

Another object of the present invention is to provide a mobile terminal configured to enable easy selection of an application icon display position and easy recognition of an application icon display position, and a method for controlling the same.

To accomplish the objects of the present invention, according to an embodiment of the present invention, there is provided a mobile terminal according to claim 1.

The controller may be configured to discriminately display icons corresponding to applications already installed and a free space for displaying the icon corresponding to the specific application to be installed.

The controller may be configured to display a progress bar indicating a download progress of an installation file of the specific application on the first screen, and display the second screen upon reception of an input applied to the progress bar.

The controller may be configured to display at least one reduced screen in a first area of the second screen, and display at least one other reduced screen corresponding to at least one application drawer in a second area of the second screen, wherein the at least one application drawer includes collected icons corresponding to previously installed applications, and wherein the icon corresponding to the specific application is displayed at a position within the application drawer.

The controller may be configured to display an application drawer for selecting a display position of the icon of the specific application upon reception of a touch input applied to the displayed icon of the specific application, and wherein the application drawer includes collected icons corresponding to previously installed applications.

The controller may be configured to display the first screen translucently, and display the second screen such that the second screen and the first screen overlap.

The controller may be configured to restore the first screen, and display the restored first screen upon selection of the position.

The controller may be configured to display a virtual icon corresponding to the specific application that can be touched and dragged to the position of the icon of the specific application.

The controller may be configured to display the virtual icon as a position corresponding to an installation button for installing the specific application in response to a touch input to the installation button.

The controller may be configured to display a notification bar indicating an installation state of the specific application, and display the second screen upon reception of an input for installing the specific application.

According to an example useful for understanding of the present invention, there is provided a mobile terminal, including: a wireless communication unit configured to provide wireless communication; a touchscreen; and a controller configured to receive a first touch input at a specific position corresponding to an empty space of the touch screen, display at least one market application for installing a specific application in response to the received first touch input receive a second touch input on the least one market application, install the specific application through the market application, in response to the received second touch input, and display an icon corresponding to the specific application at the specific position corresponding to the empty space of the touchscreen.

The controller may be configured to display at least one recommended application along with the at least one market application in response to the received second touch input, and display an icon corresponding to a selected recommended application at the specific position corresponding to the empty space of the touchscreen.

The controller may be configured to display at least one application related to a category of a specific folder upon reception of a touch input applied to the specific folder, and display an icon corresponding to a selected related application in the specific folder.

According to another embodiment of the present invention, there is provided a method for controlling a mobile terminal according to claim 11.

The method for controlling a mobile terminal may be comprise discriminately displaying icons corresponding to applications already installed and a free space for displaying the icon corresponding to the specific application to be installed.

The method for controlling a mobile terminal may be comprise displaying a progress bar indicating a download progress of an installation file of the specific application on the first screen; and displaying the second screen upon reception of an input applied to the progress bar.

The method for controlling a mobile terminal may be comprise displaying at least one reduced screen in a first area of the second screen; and displaying at least one other reduced screen corresponding to at least one application drawer in a second area of the second screen, wherein the at least one application drawer includes collected icons corresponding to previously installed applications, and wherein the icon corresponding to the specific application is displayed at a position within the application drawer.

The method for controlling a mobile terminal may be comprise displaying an application drawer for selecting a display position of the icon of the specific application upon reception of a touch input applied to the displayed icon of the specific application, wherein the application drawer includes collected icons corresponding to previously installed applications.

Effects of the mobile terminal and the method for controlling the same according to an embodiment of the present invention will now be described.

According to at least one of embodiments of the present invention, it is possible to easily select an application icon display position and to easily recognize an application icon display position.

According to at least one of embodiments of the present invention, it is possible to select a display position of an icon corresponding to a specific application during installation of the specific application.

According to at least one of embodiments of the present invention, it is possible to easily select an icon display position on a page which is displayed as a home screen or an application drawer.

According to at least one of embodiments of the present invention, it is possible to simultaneously recognize a screen for installing an application and a screen for setting a position at which the application will be installed and displayed by translucently displaying the screen for installing the application.

According to at least one embodiment of the present invention, it is possible to intuitively navigate positions at which a virtual icon can be displayed by displaying the virtual icon at a position corresponding to touch input when the touch input is maintained.

According to at least one of embodiments of the present invention, it is possible to easily select or recognize a position at which an application icon will be displayed according to touch input applied to a notification bar that indicates an application installation state.

According to at least one of embodiments of the present invention, it is possible to display an application icon at a specific position of a touchscreen, to which touch input is applied.

According to at least one of embodiments of the present invention, it is possible to easily determine an application icon installation position per folder category by displaying applications related to a folder category.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention as defined in the appended claims will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a block diagram of a mobile terminal in accordance with the present disclosure;
FIG. 2 is a flowchart illustrating a method for controlling a mobile terminal according to an embodiment of the present disclosure;
FIGS. 3 and 4 illustrate selection of an application icon display position according to an embodiment of the present disclosure;
FIG. 5 illustrates display of a second screen according to an embodiment of the present disclosure;
FIG. 6 illustrates selection of a display position of an icon corresponding to an application during installation of the application according to an embodiment of the present disclosure;
FIGS. 7 and 8 illustrate selection of an application icon display position on a page and an application drawer according to an embodiment of the present disclosure;
FIG. 9 illustrates translucent display of a screen for installing an application according to an embodiment of the present disclosure;
FIG. 10 illustrates operation of navigating application icon display positions according to an embodiment of the present disclosure;
FIGS. 11-13 illustrate selection of an application icon display position using a notification bar according to an embodiment of the present disclosure;
FIG. 14 is a flowchart illustrating a method for controlling a mobile terminal according to another embodiment of the present disclosure;
FIGS. 15-17 illustrate direct display of an application icon at a selected specific position of a touchscreen according to an embodiment of the present disclosure;
FIGS. 18 and 19 illustrate selection of an application icon display position from a folder according to an embodiment of the present disclosure;
FIG. 20 illustrates selection of the size of a displayed application icon according to an embodiment of the present disclosure; and
FIGS. 21 and 22 illustrate selection of a data storage position using a notification bar according to an embodiment of the present disclosure.

### DETAILED DESCRIPTION OF THE PREFERRED EMBODIMENTS

Description will now be given in detail according to embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

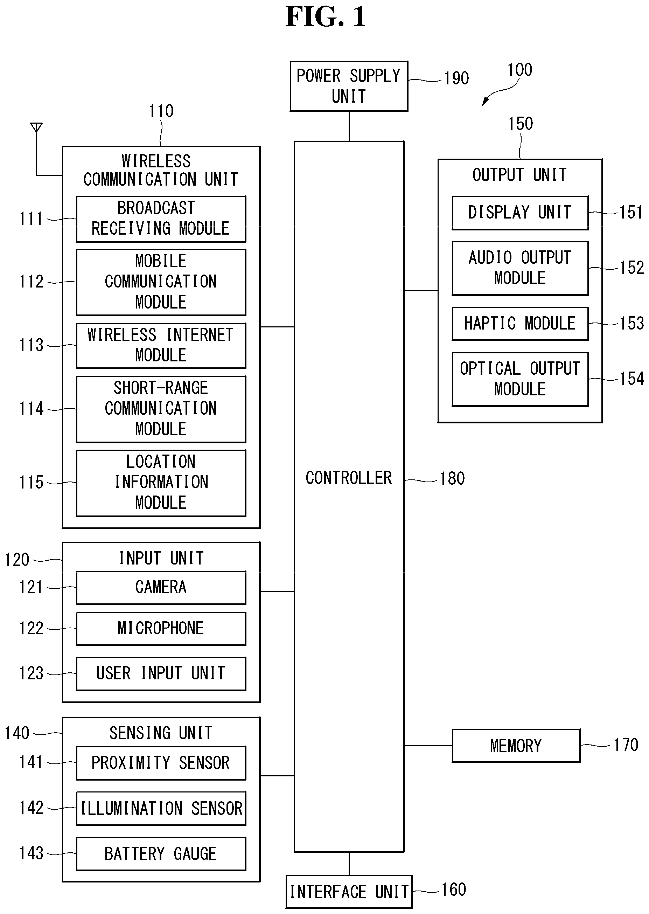

Reference is now made to FIG. 1, where FIG. 1 is a block diagram of a mobile terminal in accordance with the present disclosure. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge 143, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in Fig. 1, or activating application programs stored in the memory 170. As one example, the controller 180 controls some or all of the components illustrated in FIG. 1 according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

A description will be given of embodiments with respect to a control method that can be implemented in the aforementioned mobile terminal with reference to the attached drawings. Those skilled in the art will appreciate that the present invention may be performed in other specific ways than those set forth herein without departing from the essential characteristics of the present invention as defined in the appended claims.

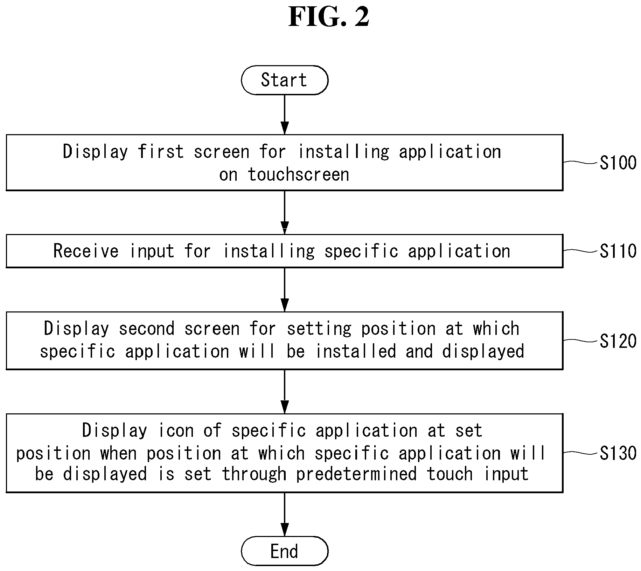

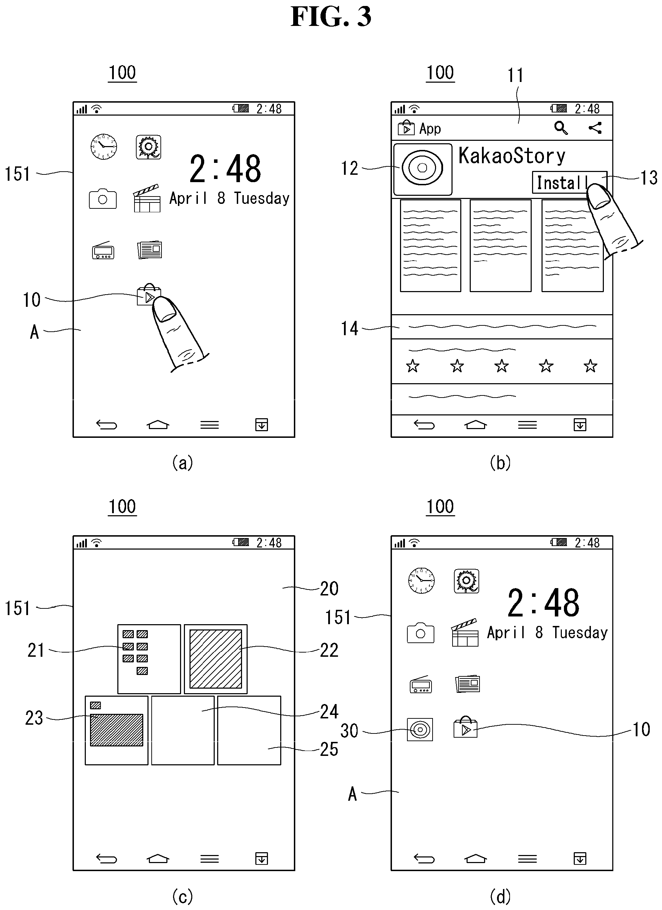

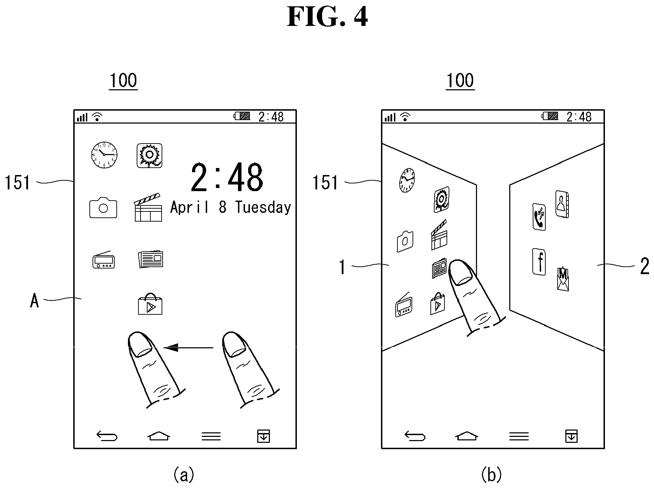

FIG. 2 is a flowchart illustrating a method for controlling a mobile terminal according to an embodiment of the present invention and FIGS. 3 and 4 illustrate selection of an application icon display position according to an embodiment of the present invention. The method for controlling a mobile terminal according to an embodiment of the present invention can be implemented in the mobile terminal 100 described above with reference to FIG. 1. The method for controlling a mobile terminal according to an embodiment of the present invention and operations of the mobile terminal 100 for implementing the method will now be described in detail with reference to the attached drawings.

Referring to FIG. 2, the controller 180 can display a first screen for installing an application on the touchscreen (S100). FIG. 3(a) shows a home screen A displayed on the touchscreen 151 of the mobile terminal 100. A user can select a market application 10 on the home screen A for installation of an application. The market application 10 may refer to an application capable of installing applications. The market application 10 is not limited to a specific application and can be any application capable of installing applications.

The controller 180 can display the first screen 11 for installing an application on the touchscreen 151, as shown in FIG. 3(b), by executing the selected market application 10. The first screen 11 may be an execution screen of the market application 10. The controller 180 can display an icon 12 corresponding to the installed application on the first screen 11. The controller 180 can display an installation button 13 for installing the application on the first screen 11. The controller 180 can display a description region 14 with respect to the installed application on the first screen 11.

Referring back to FIG. 2, the controller 180 can receive input for installing a specific application (S110). As shown in FIG. 3(b), the user can select the installation button 13 for installing an application. The controller 180 can receive the selection of the user as input for installing a specific application. However, the input for installing a specific application is not limited thereto and may be predetermined touch input applied to the icon 12 or the description region 14. The predetermined touch input includes touch inputs, such as short touch, long touch and multi-touch, or a combination thereof.

The controller 180 can install the specific application in the mobile terminal 100 upon reception of the input. In particular, the controller 180 can download an installation file of the specific application using the wireless communication unit 110 through an external communication network, and install the specific application in the mobile terminal 100 upon completion of download of the installation file.

Referring back to FIG. 2, the controller 180 can display a second screen for setting a position at which the specific application is installed and displayed (S120). FIG. 3(c) shows the second screen 20 displayed on the touchscreen 151 according to an embodiment. The second screen 20 may include one or more reduced screens 21 to 25 respectively corresponding to one or more pages.

One of the pages includes application icons and can be displayed on the home screen, as shown in FIG. 4(a). The user can touch a specific region of the home screen A and drag the touch in order to view another page. The controller 180 can move the previous page 1 in the drag direction, as shown in FIG. 4(b). In addition, the controller 180 can display the next page 2.

Referring back to FIG. 3(c), the reduced screens 21 to 25 respectively corresponding to five pages are displayed on the second screen 20. However, this is exemplary and the number of displayed pages can be changed as necessary. The reduced pages 21 to 25 display applications, which are displayed in the corresponding pages. The reduced screen 21 corresponds to the page shown in FIG. 3(a) and displays seven application icons.

Referring back to FIG. 2, when the position at which the specific application is displayed is selected through the predetermined touch input, the controller 180 can display an icon corresponding to the specific application at the selected position (S130). The user can select a page for displaying the icon of the specific application from the second screen 20. When the user selects the reduced screen 21, the controller 180 can display the icon 30 of the specific application on the page corresponding to the reduced screen 21, as shown in FIG. 3(d).

In one embodiment, the controller 180 can display the icon 30 in a region of the page, which is selected by the user. The user can select a region to display the icon 30 in the reduced screen 21. Alternatively, the user can select a region to display the icon 30 in the page corresponding to the reduced screen 21 after display of the page.

In another embodiment, the display position of the icon 30 may be determined in predetermined order. For example, the icon 30 can be displayed in a region corresponding to the uppermost row of the leftmost column in a blank area of the page. However, the icon display position determination order is not limited thereto and may be changed as necessary. Accordingly, the user can install the specific application on the first screen 11 corresponding to the execution screen of the market application 10 and, simultaneously, select the position at which the specific application is installed. Accordingly, the user can conveniently select the position at which the icon of the specific application is displayed. In addition, the user can immediately recognize the position at which the icon of the specific application is displayed.

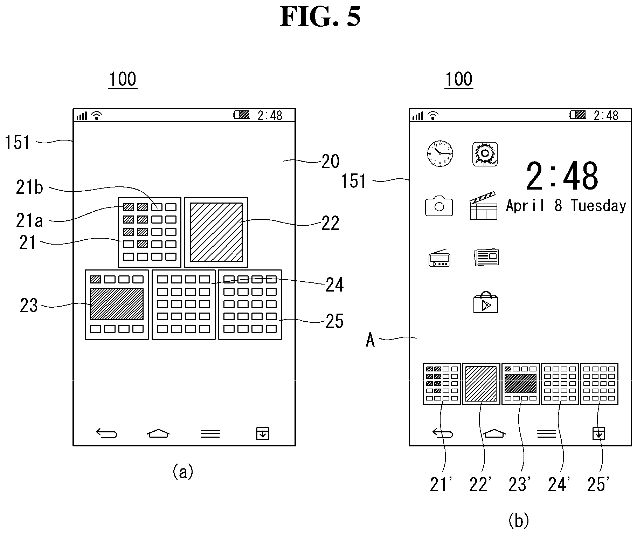

Next, FIG. 5 illustrates display of the second screen according to an embodiment of the present invention. Referring to FIG. 5(a), the controller 180 can display the reduced screens 21 to 25 on the second screen 20 so regions of the reduced screens 21 to 25, in which icons are displayed, are discriminated from regions in which icons can be displayed.

For example, the controller 180 can display the reduced screen 21 corresponding to the page shown in FIG. 3(a). Shaded regions 21a of the reduced screen 21 may refer to regions in which application icons are currently displayed. Blank regions 21b may refer to regions in which application icons can be displayed.

Referring to FIG. 5(b), the controller 180 can display reduced screens 21' to 25' in the lower part of the home screen A. The controller 180 can display the reduced screen 21' corresponding to the page currently displayed on the home screen A such that the reduced screen 21' is discriminated from other reduced screens 22' to 25'. Accordingly, the user can intuitively recognize a region in each page, in which an application can be displayed, and thus the user can easily select an icon display position.

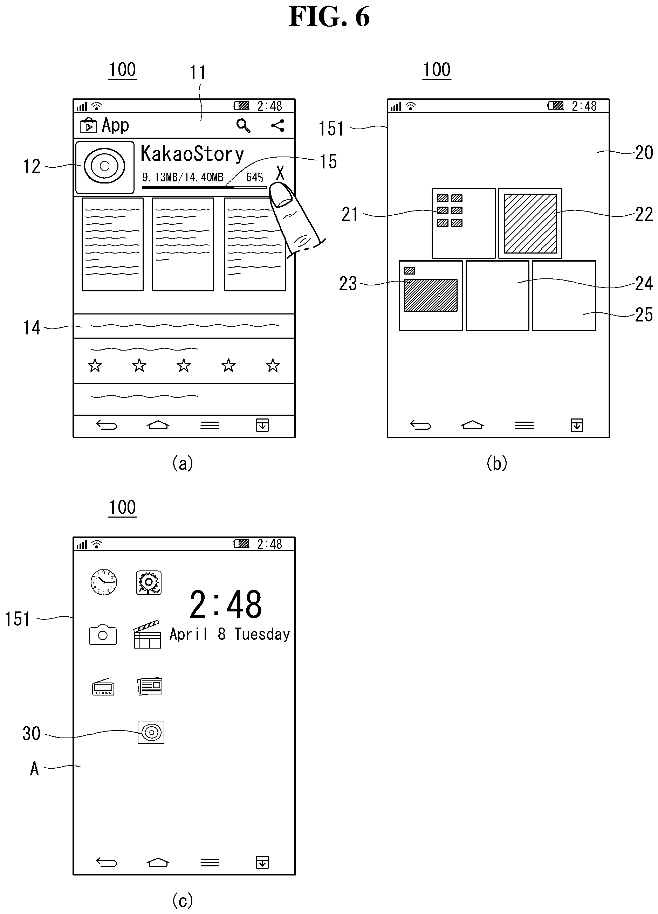

FIG. 6 illustrates selection of a display position of an icon corresponding to an application during installation of the application according to an embodiment of the present invention. Referring to FIG. 6(a), the controller 180 can display a progress bar 15 that indicates a download progress state of a specific application installation file. The application installation file refers to a file for installing a specific application in the mobile terminal 100. Any application installation file can correspond to the specific application installation file if the file can install a specific application in the mobile terminal 100.

Referring to FIG. 6(b), the controller 180 can display the second screen 20 upon reception of input to the progress bar 15. Since the reduced screens 21 to 25 displayed on the second screen 20 are substantially the same as those shown in FIG. 3(c), detailed description thereof is omitted. When the user selects the reduced screen 21 displayed on the second screen, the controller 180 can display the icon 30 corresponding to the specific application, as shown in FIG. 6(c).

Accordingly, the user can select a position at which the icon corresponding to the specific application will be displayed even during download of the specific application installation file, and thus the user can conveniently select the display position of the icon of the specific application. In addition, the user can immediately recognize the display position of the icon of the specific application. According to another embodiment, the progress bar 15 can indicate an installation progress of the downloaded specific application installation file. In this instance, the user can select the display position of the icon 30 even during installation of the specific application at a predetermined position.

Upon completion of installation of the specific application, the controller 180 can display the icon 30 at the position selected by the user. In addition, the controller 180 can also display the icon 30 at the predetermined position. However, the present invention is not limited thereto and the controller 180 can display the icon 30 only at the position selected by the user.

Accordingly, the user can select the position at which the icon corresponding to the specific application will be displayed even during installation of the specific application and thus the user can conveniently select the display position of the icon of the specific application. Furthermore, the user can immediately recognize the display position of the icon of the specific application.

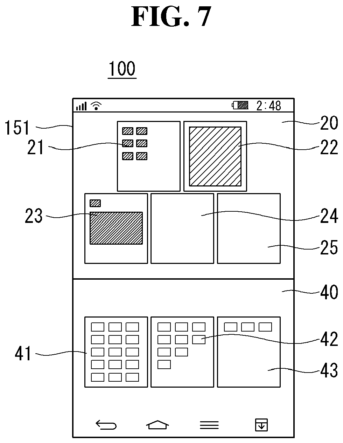

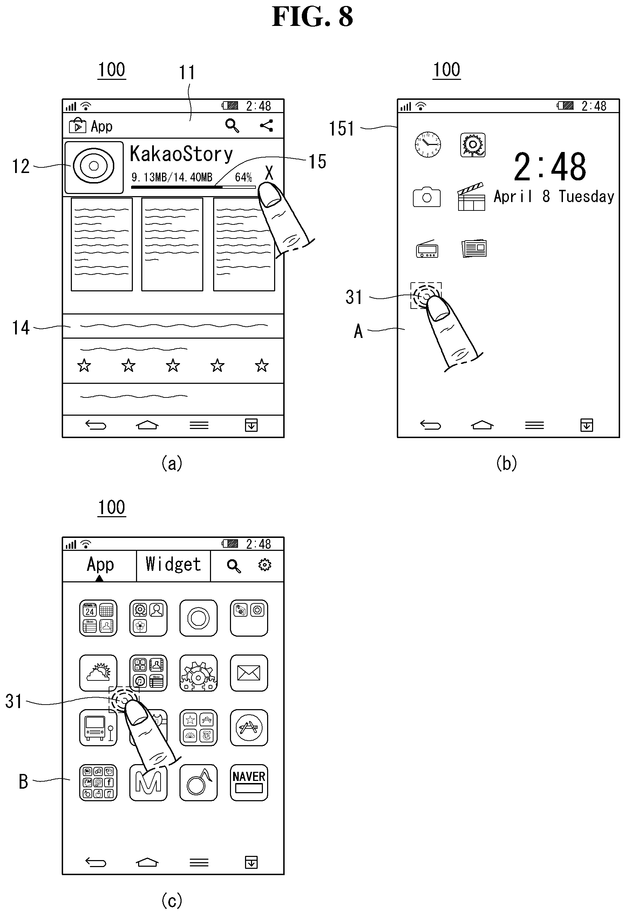

Next, FIGS. 7 and 8 illustrate selection of an application icon display position in a page and an application drawer according to an embodiment of the present invention. Referring to FIG. 7, the controller 180 can display the reduced screens 21 to 25 respectively corresponding to the pages, described above with reference to FIG. 4, in one area 20 of the second screen. In addition, the controller 180 can display one or more reduced screen 41 to 43 respectively corresponding to one or more application drawers in the other area 40 of the second screen.

The application drawer can refer to a page in which icons of applications installed in the mobile terminal are collected. The page described above with reference to FIG. 4 can be discriminated from the application drawer since the page includes icons to be displayed on the home screen A. Accordingly, the user can easily select a position at which an icon corresponding to an installed application will be displayed from reduced screens 21 to 25 corresponding to pages or reduced screens 41 to 43 corresponding to application drawers.

According to one embodiment, the controller 180 can display the second screen shown in FIG. 7 first when the user applies input to the first screen 11 shown in FIG. 3. When the user select the area 20 of the second screen, the controller 180 can magnify the area 20 and display the area 20 in the entire area of the touchscreen 151, as shown in FIG. 3(c). When the user select the other area 40 of the second screen, the controller 180 can display the other area 40 in the entire area of the touchscreen 151.

Referring to FIG. 8(a), the controller 180 can display the first screen 11. The controller 180 can display an icon on the page displayed on the home screen A through the procedure described above with reference to FIG. 6. Referring to FIG. 8(b), the controller 180 can display an icon 31 in a different manner. While the icon 31 is indicated by a dotted line in FIG. 8(b), the present invention is not limited thereto. The controller 180 can display the icon 31 such that the color, size or the like of the icon 31 is discriminated form other icons.

When the user selects the icon 31, the controller 180 can display an application drawer B for selecting a display position of the icon 31. When the user selects a specific position, the controller 180 can display the icon 31 at the selected position in the application drawer B.

According to one embodiment, the controller 180 can display the icon 31 at a position at which the user touches the icon 31 in FIG. 8(b). When the user maintains touch input for a predetermined time, the controller 180 can display the application drawer B as shown in FIG. 8(c). The user can touch the icon 31 and drag the touch to the left and right or up and down. Then, the controller 180 can display another application drawer positioned in the drag direction, on the touchscreen 151.

FIG. 8 shows that the display position of the icon 31 in the corresponding page is determined and then the icon display position in the application drawer is determined. However, the present invention is not limited thereto and the controller 180 can determine the icon display position in the application drawer first and then determine the icon display position in the page. Accordingly, the user can easily select the display position of the icon of the installed specific application in the page and the application drawer.

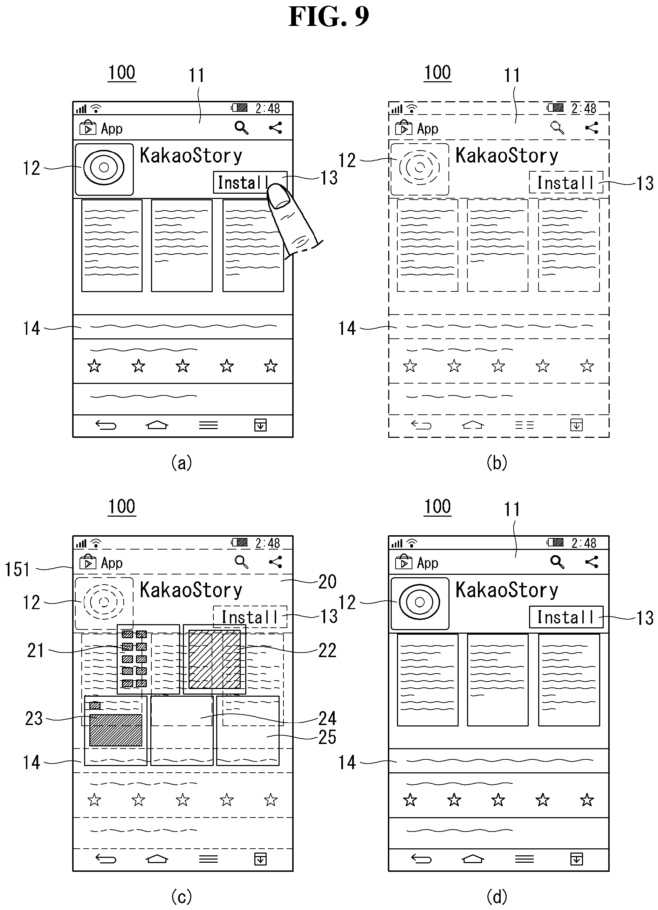

FIG. 9 illustrates translucent display of the first screen 11 for installing an application according to an embodiment of the present invention. Referring to FIG. 9(a), when the user selects the installation button 13, the controller 180 can install a specific application. In this instance, the controller 180 can display the first screen in a translucent manner, as shown in FIG. 9(b). According to an embodiment, the controller 180 can translucently display the progress bar indicating installation progress during installation of the specific application.

Referring to FIG. 9(c), the controller 180 can display the second screen 20 on the first screen 11 so the second screen 20 and the first screen 11 overlap. The controller 180 can display the first screen 11 in a translucent manner and, simultaneously, display the second screen 20. In addition, the controller 180 can sequentially perform translucent display of the first screen 11 and display of the second screen 20.

The user can select the position at which the specific application icon will be displayed from the reduced screens 21 to 25. Upon selection of the position, the translucent first screen can be restored, as shown in FIG. 9(d). Accordingly, the user can select the icon display position while viewing the description region 14 of the specific application or the progress bar indicating application installation progress.

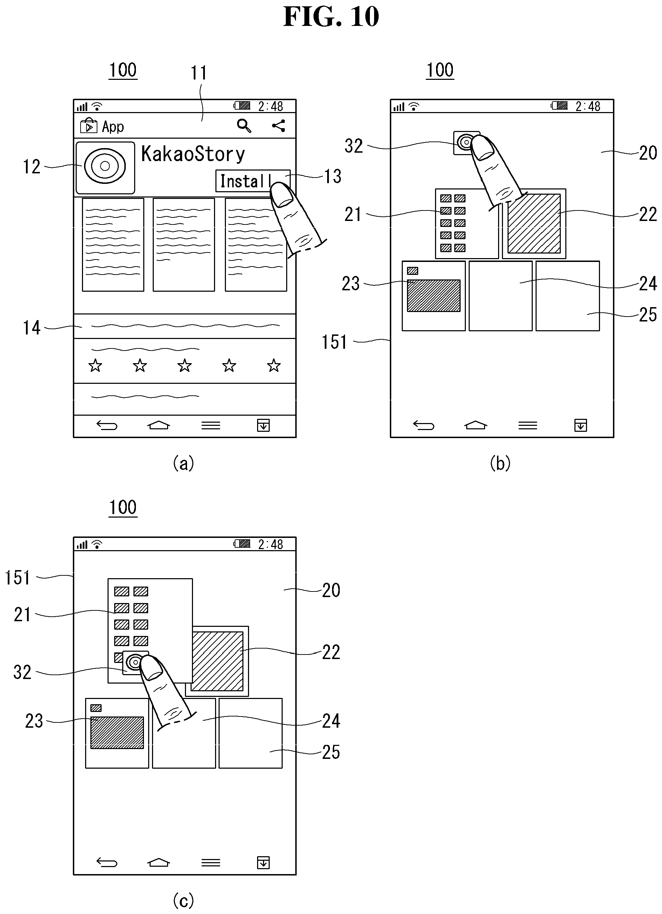

FIG. 10 illustrates operation of navigating application icon display positions according to an embodiment of the present invention. Referring to FIG. 10(a), the controller 180 can receive touch input which is applied to the installation button 13, displayed on the first screen 11, and maintained for a predetermined time. The present invention is not limited thereto and the touch input may be preset to various touch inputs such as short touch and multi-touch or a combination thereof.

The controller 180 can display a virtual icon 32 corresponding to the specific application at the position to which the touch input applied, as shown in FIG. 10(b), upon reception of the touch input. The user can navigate positions at which the specific application can be displayed according to drag input applied to the virtual icon 32. Navigation can refer to an operation for selecting a position at which the virtual icon 32 will be finally displayed.

Referring to FIG. 10(c), the user can drag the virtual icon 32 to the specific reduced screen 21 from among the reduced screens 21 to 25 corresponding to pages. The controller 180 can magnify the reduced screen 21. The user can move the virtual icon 32 between reduced screens 21 to 25 through drag input. Furthermore, the user can select the virtual icon display position by dragging the virtual icon 32 to a position of an icon displayed on the selected reduced screen. In this instance, the controller 180 can move a pre-displayed icon in a predetermined direction from the original position thereof. Alternatively, the controller 180 can delete the pre-displayed icon from the corresponding page.

While description of the aforementioned operation is based on pages in FIG. 10, the operation can be equally applied to operation based on the application drawer. Accordingly, the user can conveniently select the position of the specific application icon.

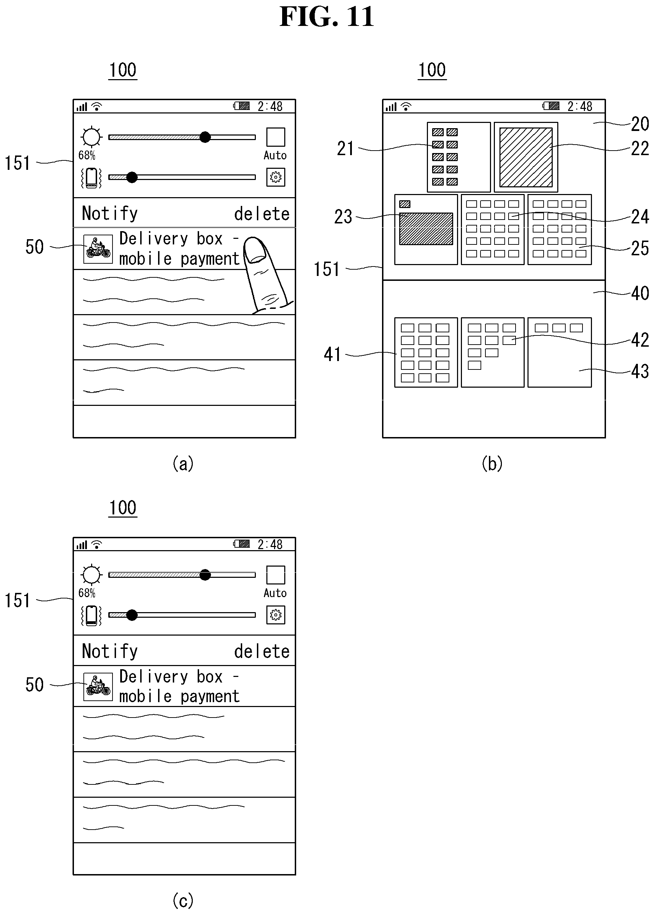

FIGS. 11-13 illustrate selection of an application icon display position using a notification bar according to an embodiment of the present invention. The controller 180 can indicate application installation file download state or application installation state through the notification bar. FIG. 11(a) shows a notification bar 50 indicating that a specific application has been installed.

When the user selects the notification bar 50, the controller 180 can display one or more reduced screens 21 to 25 respectively corresponding to one or more pages, described above with reference to FIG. 4, in the area 20 of the second screen, as shown in FIG. 11(b). In addition, the controller 180 can display one or more reduced screens 41 to 43 respectively corresponding to one or more application drawers in the area 40 of the second screen.

However, the present invention is not limited thereto and the controller 180 can display only the area 20 or the area 40 in the entire area of the touchscreen 151. The following procedure of selecting an icon display position is substantially the same as the aforementioned procedure and thus detailed description thereof is omitted.

Upon selection of a display position of the icon of the specific application, the controller 180 can display the icon at the selected position. In this instance, the icon may be displayed at a predetermined position when the specific application is installed. Accordingly, the controller 180 can delete the icon displayed at the predetermined position. However, the present invention is not limited thereto and the icon displayed at the predetermined position may be maintained.

The controller 180 can display the screen on which the notification bar 50 is displayed upon selection of the display position of the specific application icon, as shown in FIG. 11(c). Accordingly, the user can easily select the specific application icon display position by selecting the notification bar even when the icon of the specific application is displayed at the predetermined position.

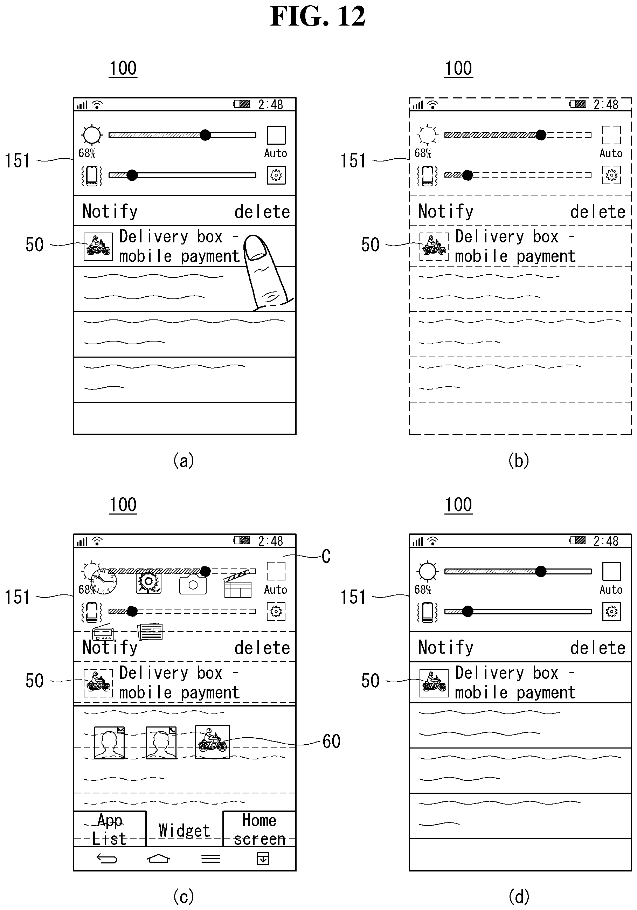

Referring to FIG. 12(a), the user can select the notification bar 50 indicating that the specific application has been installed. The controller 180 can display a screen C for selecting positions of widgets 60 to 62 corresponding to the specific application, as shown in FIG. 12(b). A widget can refer to a user interface that reflects and displays an execution result of the specific application. The screen C for selecting a widget position may be the page displayed on the home screen A or a widget drawer.

The user can select a specific widget 62 and drag the selected widget 62 to the screen C for selecting a widget position so as to select a display position of the widget 62. The controller 180 can display the second screen 20 described above with reference to FIG. 3(c) according to an embodiment. The controller 180 can display the reduced screens 21 to 25 corresponding to pages in the area 20 of the second screen, as described above with reference to FIG. 7, according to another embodiment. The controller 180 can display a reduced screen corresponding to a widget drawer in the other area 40 of the second screen.

Accordingly, the user can easily select a display position of a widget corresponding to the specific application through the notification bar 50. The above description of selection of a display position of a specific application icon can be equally applied to selection of a display position of a widget.

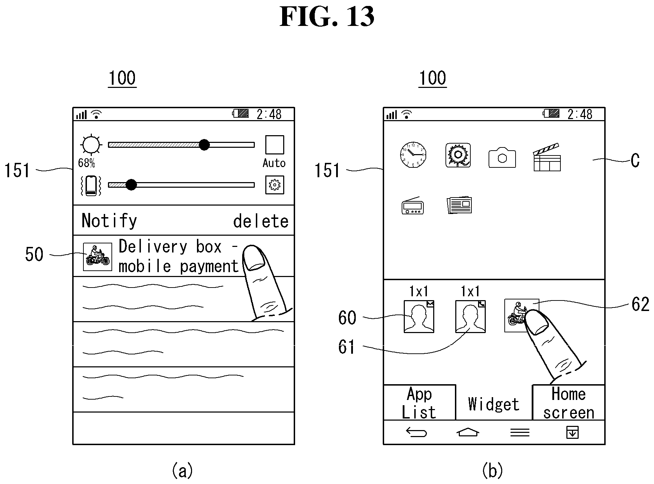

Referring to FIG. 13(a), the user can select the notification bar 50 indicating that the specific application has been installed. The controller 180 can display the screen on which the notification bar 50 is displayed in a translucent manner, as shown in FIG. 13(b). Referring to FIG. 13(c), the controller 180 can display the screen C for selecting a position of a widget corresponding to the specific application so the screen C and the screen displaying the notification bar 50 overlap.

However, the present invention is not limited thereto and the controller 180 can display the second screen shown in FIG. 11(b) so the second screen and the screen displaying the notification bar 50 overlap. Alternatively, the controller 180 can magnify the area 20 or the other area 40 of the second screen shown in FIG. 11(b) and display the magnified area such that the magnified area and the screen displaying the notification bar 50 overlap. In this instance, the user can select a display position of the icon of the specific application.

The controller 180 can simultaneously perform translucent display of the screen on which the notification bar 50 is displayed and display of the screen C for selecting a widget position. Furthermore, the controller 180 can sequentially perform translucent display of the screen on which the notification bar 50 is displayed and display of the screen C for selecting a widget position.

The user can select a display position of the widget 60 on the screen C. Upon selection of the display position of the widget 60, the controller 180 can restore the translucent screen displaying the notification bar 50, as shown in FIG. 13(d). Accordingly, the user can select the display position of the widget 60 while viewing the notification bar 50 indicating the state of the specific application.

While above description is based on the notification bar 50 indicating completion of installation of the specific application, the present invention is not limited thereto. According to an embodiment, the controller 180 can display a progress bar indicating installation of the specific application on the notification bar 50. In this instance, the user can select a position of the specific application icon even during installation of the specific application.

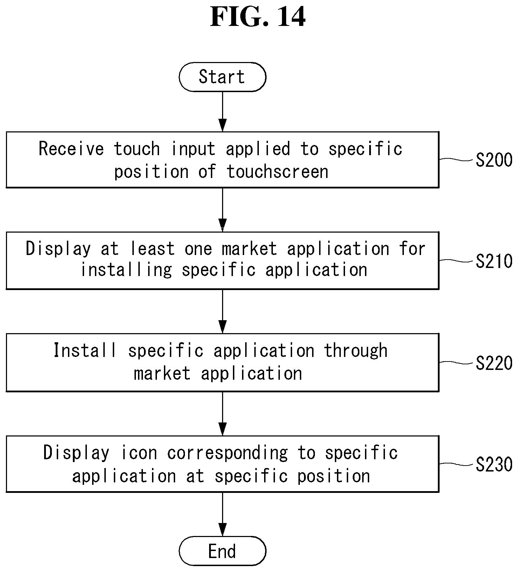

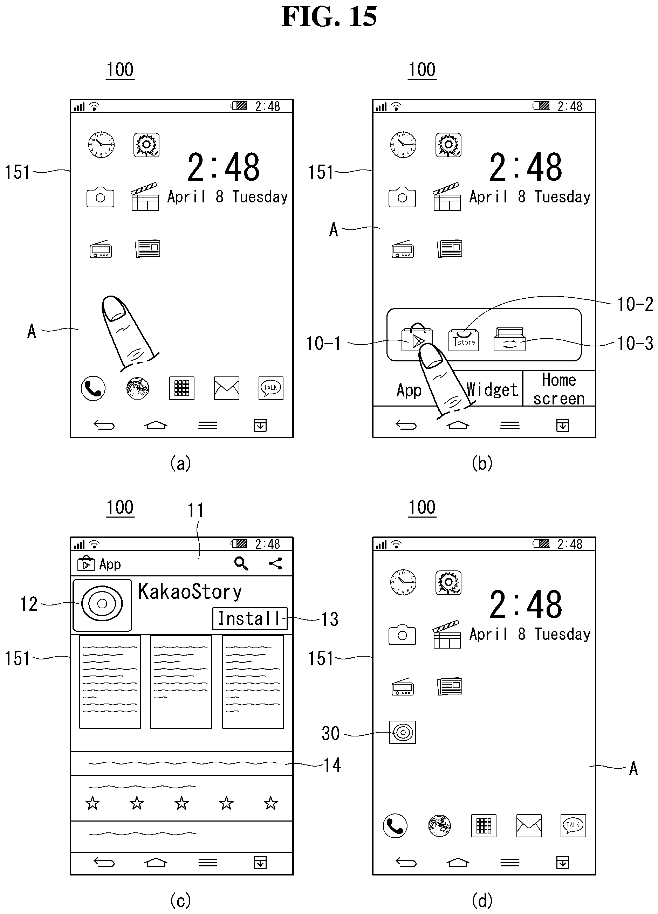

FIG. 14 is a flowchart illustrating a method for controlling a mobile terminal according to another embodiment of the present invention and FIGS. 15-17 illustrate direct display of an application icon at a selected specific position on the touchscreen according to an embodiment of the present invention. The method for controlling a mobile terminal according to another embodiment of the present invention can be implemented in the mobile terminal 100 described above with reference to FIG. 1.

Referring to FIG. 14, the controller 180 can receive a touch input applied to a specific position on the touchscreen 151 (S200). Referring to FIG. 15(a), the controller 180 can receive a predetermined touch input applied to a specific position on the home screen A. The predetermined touch input includes various touch inputs such as short touch, long touch and multi-touch or a combination thereof.

Referring back to FIG. 14, the controller 180 can display one or more market applications 10_1 to 10_3 for installing a specific application (S210). Referring to FIG. 15(b), the controller 180 can display the market applications 10_1 to 10_3 at the position to which the predetermined touch input is applied upon reception of the predetermined touch input. However, the display position of the market applications 10_1 to 10_3 is not limited thereto and may be determined differently as necessary.

Referring back to FIG. 14, the controller 180 can install the specific application through a market application (S220). The user can select one 10_1 of the displayed market applications 10_1 to 10_3, and can display an execution screen 11 of the selected market application 10_1 as shown in FIG. 15(c). The controller 180 can display an icon corresponding to the installed application on the execution screen 11 and display the installation button 13 for application installation on the execution screen 11. Further, the controller 180 can display the description region 14 with respect to the installed application on the execution screen 11, and when the user selects the installation button 13, install the specific application in the mobile terminal 100.

Referring back to FIG. 14, the controller 180 can display the icon 30 corresponding to the specific application at the specific position (S230). The controller 180 can display the icon 30 of the specific application at the specific position of the home screen A, as shown in FIG. 15(d). In this instance, the specific position may correspond to the position to which the predetermined touch input is applied. The user can easily select the display position of the icon of the specific application without additionally designating the display position through touch input applied to a desired position on the home screen A.

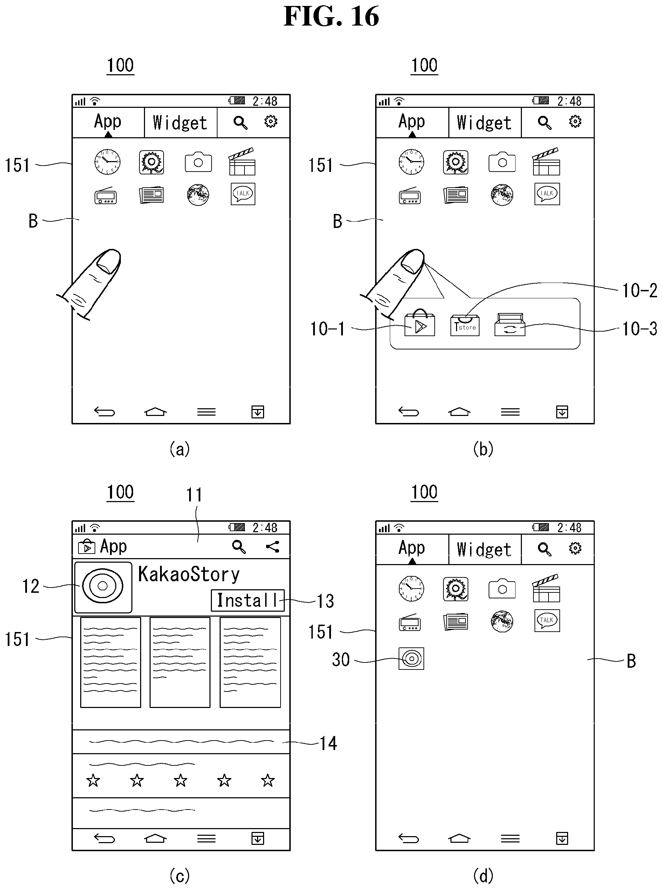

Referring to FIG. 16(a), the controller 180 can receive a predetermined touch input applied to a specific position of an application drawer B. The predetermined touch input includes touch inputs such as short touch, long touch and multi-touch or a combination thereof. Referring to FIG. 16(b), the controller 180 can display the market applications 10_1 to 10_3 at the position to which the predetermined touch input is applied upon reception of the predetermined touch input. However, the display position of the market applications 10_1 to 10_3 is not limited thereto and may be determined differently as necessary.

The user can select one 10_1 of the displayed market applications 10_1 to 10_3. The controller 180 can display the execution screen 11 of the selected market application 10_1, as shown in FIG. 16(c). When the user selects the installation button 13, the controller 180 can install the specific application in the mobile terminal 100.

The controller 180 can display the icon 30 of the specific application at the specific position of the application drawer B, as shown in FIG. 16(d). In this instance, the specific position may correspond to the position at which the predetermined touch input is applied. The user can easily select the display position of the icon of the specific application without additionally designating the display position through touch input applied to a desired position of the application drawer B.

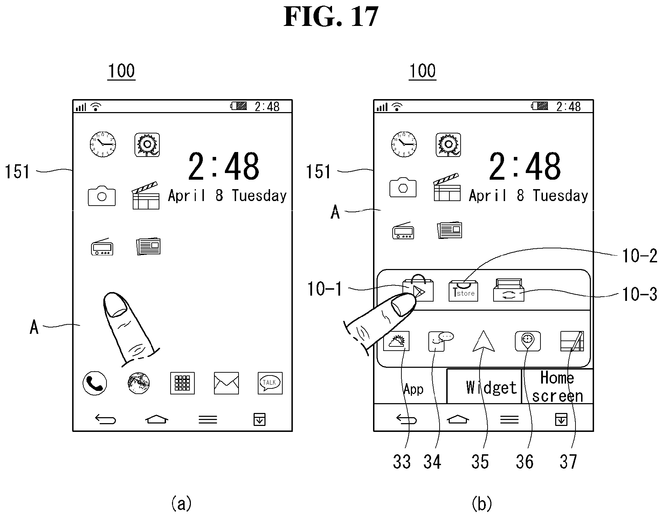

Referring to FIG. 17(a), the controller 180 can receive a predetermined touch input applied to a specific position on the home screen A. The predetermined touch input includes various touch inputs such as short touch, long touch and multi-touch or a combination thereof. Referring to FIG. 17(b), the controller 180 can display the market applications 10_1 to 10_3 at the position to which the predetermined touch input is applied upon reception of the predetermined touch input. However, the display position of the market applications 10_1 to 10_3 is not limited thereto and may be determined differently as necessary.

The controller 180 can display one or more recommended applications 33 to 37 along with the market applications 10_1 to 10_3. The recommended applications 33 to 37 may be applications related to a most recently executed application. For example, when a most recently executed application is a diary application, the controller 180 can display a schedule application, a gallery application and the like, related to the diary application, as recommended applications.

According to another embodiment, the controller 180 can display the recommended applications 33 to 37 based on the category of applications with high execution frequency according to the application use pattern of the user of the mobile terminal 100. For example, when a game application has highest execution frequency, the controller 180 can display game applications in a similar category to that of the executed game application as the recommended applications.

The user can select one of the recommended applications 33 to 37, and the controller 180 can display an icon corresponding to the selected recommended application at the specific position. Accordingly, the user can easily select a position at which an icon corresponding to a recommended application will be displayed. In addition, a specific application can be recommended to the user and thus the user can conveniently install a new application.

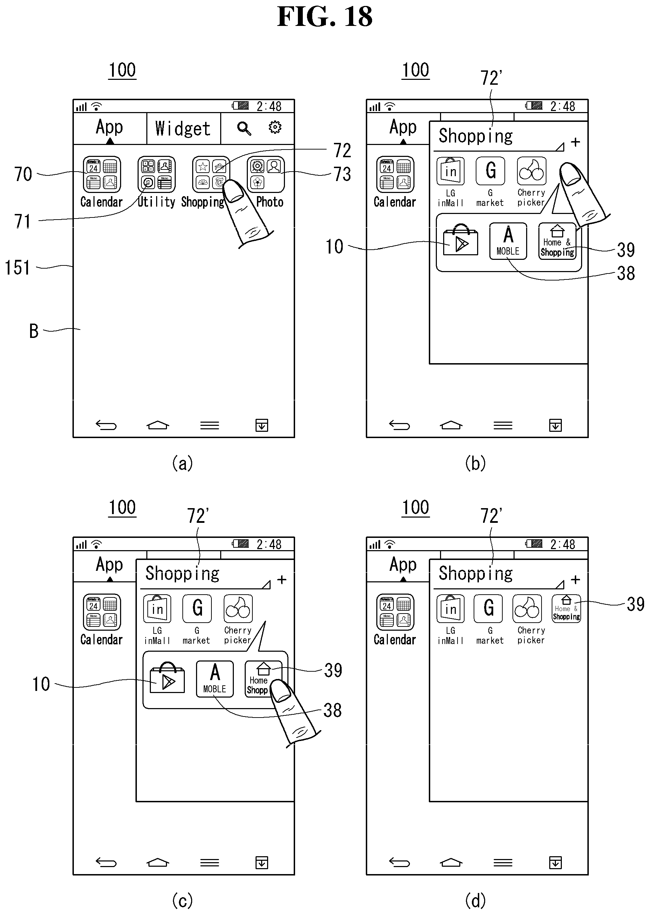

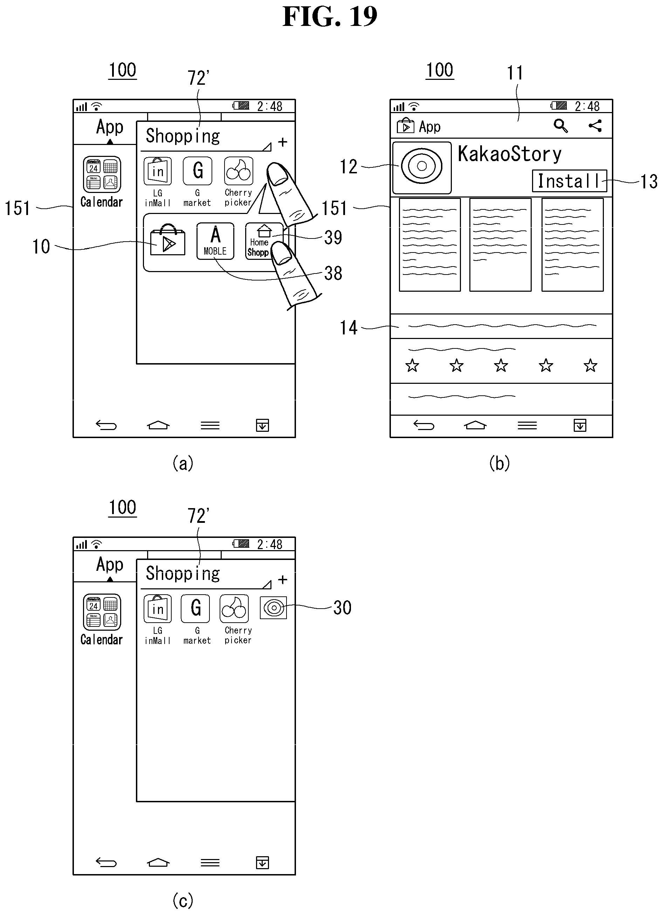

FIGS. 18 and 19 illustrate selection of an application icon display position from folders 70 to 73 according to an embodiment of the present invention. FIG. 18(a) shows that folder applications 70 to 73 are displayed per category in the application drawer B. The controller 180 can receive touch input applied to a folder 72 in a shopping category.

Referring to FIG. 18(b), the controller 180 can display an execution screen 72' of the folder 72 in the shopping category. The controller 180 can receive a predetermined touch input applied to a specific position of the execution screen 72'. The predetermined touch input may be various touch inputs such as short touch, long touch and multi-touch or a combination thereof.

The controller 180 can display a market application 10 and one or more applications 38 and 39 related to the category of the selected folder 72. Referring to FIG. 18(c), the user can select a specific related application 39. Then, the controller 180 can display an icon corresponding to the selected application 39 at the specific position, as shown in FIG. 18(d). Accordingly, the user can easily arrange icons of related applications installed in the mobile terminal 100 by category, and thus application management convenience is improved.

Referring to FIG. 19(a), the controller 180 can receive touch input applied to a specific position of an execution screen 72' of the folder 72 in the shopping category. The controller 180 can display the market application 10 and one or more applications 38 and 39 related to the category of the selected folder 72. The user can select the specific related application 39. When the selected application 39 has not been installed in the mobile terminal 100, the controller 180 can execute a market application capable of installing the selected application 39, as shown in FIG. 19(b).

The controller 180 can install the related application 39 upon reception of input applied to the installation button 13. The controller 180 can display the icon corresponding to the related application 39 at the specific position. Referring back to FIG. 18, when the user selects the market application 10, the controller 180 can display an execution screen of the market application 10. When the user installs a specific application, the controller 180 can display an icon of the specific application at the specific position.

Accordingly, the user can be provided with a related application according to the category of the folder and easily display the icon of the related application at a specific position of the folder. Therefore, there is no need for an additional process of installing the application and then moving the icon of the application to a specific folder.

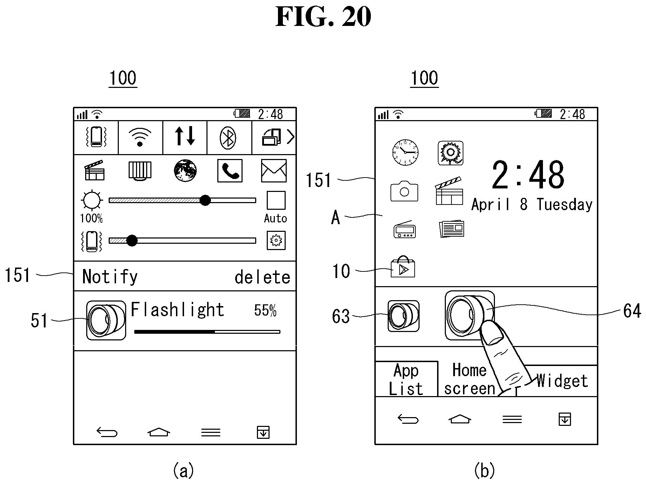

FIG. 20 illustrates selection of a size of a displayed application icon according to an embodiment of the present invention. Referring to FIG. 20(a), the controller 180 can display a notification bar 51 that indicates installation progress of a specific application. When the user selects the notification bar 51, the controller 180 can display icons 63 and 64 of the specific application in various sizes, as shown in FIG. 20(b). The controller 180 can display the home screen A through which display positions of the icons 63 and 64 can be selected along with the icons 63 and 63.

The user can select a specific icon 64 and drag the selected icon 64 to a desired position of the home screen A. The controller 180 can display the icon 64 selected by the user at the selected position. Accordingly, the user can easily select the size of the icon corresponding to the installed application. While the aforementioned operation is based on the home screen A and icons, the operation can be equally applied to the aforementioned application drawer, widget drawer and widgets.

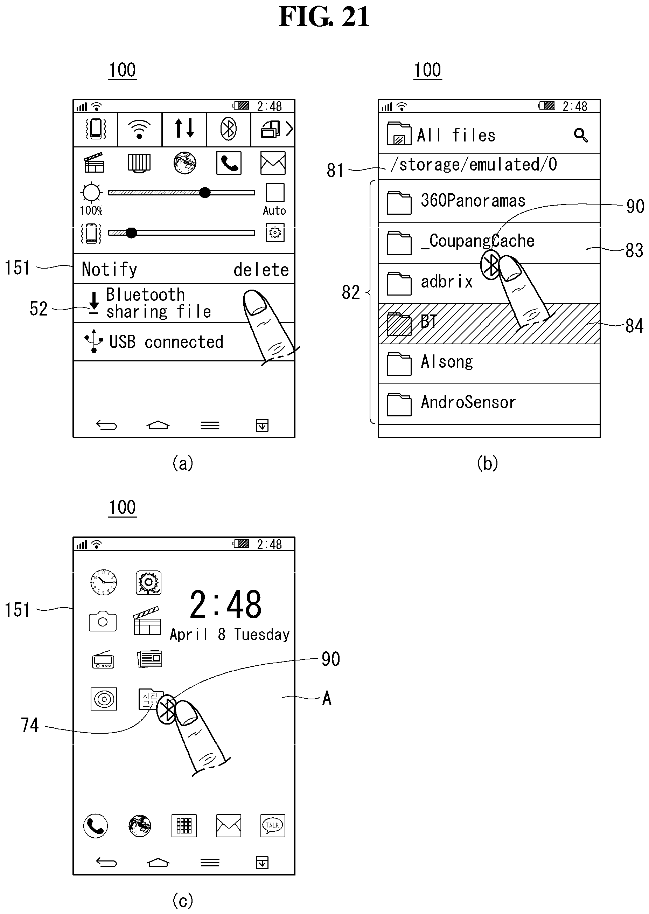

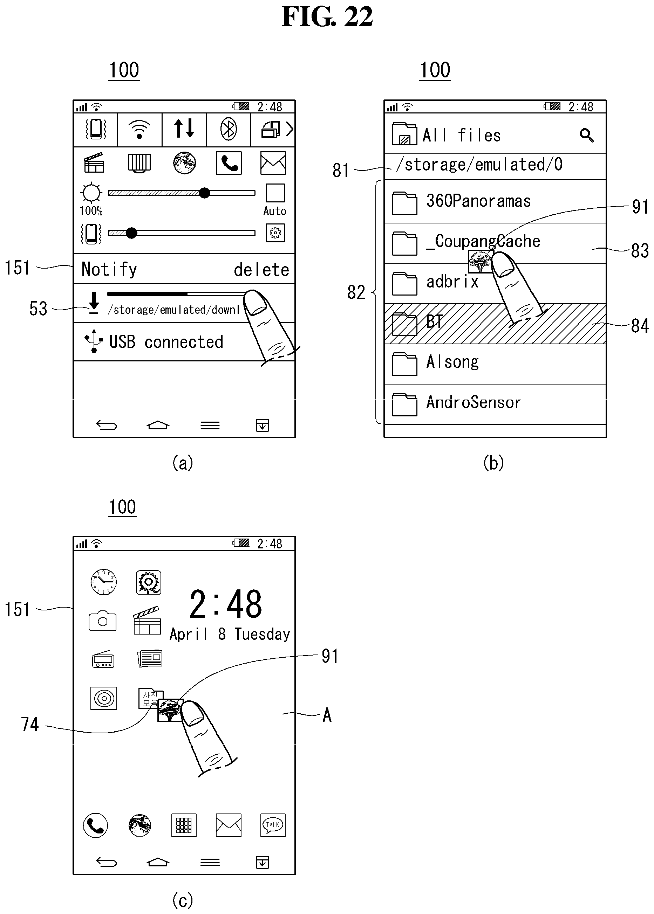

FIGS. 21 and 22 illustrate selection of a data storage position using a notification bar according to an embodiment of the present invention. Referring to FIG. 21(a), the controller 180 can display a notification bar 52 indicating that a specific file is shared using Bluetooth. This is and the notification bar 52 may indicate download state and other states in addition to file sharing.

The controller 180 can receive a predetermined touch input applied to the notification bar 52. The predetermined touch input includes touch inputs such as short touch, long touch and multi-touch or a combination thereof. Referring to FIG. 21(b), the controller 180 can display a shared file 90 at a position to which touch input of the user is applied. The controller 180 can display folders 82 in which the file can be stored and a folder path 81.

The controller 180 can display a folder 84 in which the shared file 90 is stored according to a predetermined standard such that the folder 84 is distinguished from other folders. While the folder 84 is shaded in FIG. 21(b), the folder 84 can be indicated in a color, shade or the like, different from those of other folders. The user can drag the shared file 90 to a folder 83 in which the user wants to store the shared file 90. Then, the controller 180 can move the shared file 90 from the folder 84 to the desired folder 83. However, the present invention is not limited thereto and the controller 180 can copy the shared file 90 to the desired folder 83 according to specific input.

According to another embodiment, the controller 180 can display a screen on which a folder capable of storing the shared file is displayed, as shown in FIG. 21(c). Referring to FIG. 21(c), the controller 180 can display the home screen A. However, the present invention is not limited thereto and the controller 180 can display the aforementioned pages, application drawer or reduced screens. Accordingly, the user can conveniently store a specific file at a desired position by selecting the notification bar without searching for the folder in which the specific file is stored.

Referring to FIG. 22(a), the controller 180 can display the notification bar 52 indicating download progress of a specific file. The controller 180 can receive a predetermined touch input applied to the notification bar 52. The predetermined touch input includes touch inputs such as short touch, long touch and multi-touch or a combination thereof. The controller 180 can display a downloaded file 91 at a position to which touch input of the user is applied, as shown in FIG. 22(b). The controller 180 can display the folders 82 in which the file can be stored and the folder path 81.

The controller 180 can display the folder 84 in which the downloaded file 91 is stored according to a predetermined standard such that the folder 84 is discriminated from other folders. While the folder 84 is shaded in FIG. 22(b), the folder 84 can be indicated in a color, shade or the like, different from those of other folders. The user can drag the downloaded file 90 to the folder 83 in which the user wants to store the downloaded file 91. Then, the controller 180 can move the downloaded file 90 from the folder 84 to the desired folder 83.

According to another embodiment, the controller 180 can display a screen on which a folder capable of storing the downloaded file 91 is displayed, as shown in FIG. 22(c). Referring to FIG. 22(c), the controller 180 can display the home screen A. However, the present invention is not limited thereto and the controller 180 can display the aforementioned pages, application drawer or reduced screens. Accordingly, the user can conveniently store a specific file at a desired position by selecting the notification bar without searching for the folder in which the specific file is stored during storage of the specific file.

Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the embodiments described herein may be combined in various ways to obtain additional and/or alternative embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

## Claims

1. A mobile terminal (100), comprising:
a wireless communication unit (110) configured to provide wireless communication;
a touchscreen (151) configured to display a page including at least one application icon on a home screen, wherein the page is one of a plurality of pages that are selectively displayed on the home screen; and
a controller (180) configured to:
display a first screen (11) of a market application for installing a specific application on the touchscreen (151),
receive a first input for installing the specific application on the first screen,
display a second screen (20) including a plurality of reduced screens each respectively corresponding to one of the plurality of pages, wherein the reduced screens are displayed by reducing the corresponding pages,
receive a second input for selecting one of the reduced screens and selecting a first position on the selected reduced screen, and
display an icon (30) of the specific application at a second position on a page corresponding to the first position on the selected reduced screen after the specific application is installed on the touchscreen (151) .

2. The mobile terminal (100) of claim 1, wherein the controller (180) is configured to discriminately display icons corresponding to applications already installed, and a free space for displaying the icon corresponding to the specific application to be installed on the second screen (20).

3. The mobile terminal (100) as claimed in any one of claims 1 to 2, wherein the controller (180) is configured to:
display a progress bar indicating a download progress of an installation file of the specific application on the first screen (11), and
display the second screen (20) upon reception of an input applied to the progress bar.

4. The mobile terminal (100) of claim 1, wherein the controller (180) is configured to:
display the reduced screens in a first area of the second screen (20), and
display at least one other reduced screen corresponding to at least one application drawer in a second area of the second screen (20),
wherein the at least one application drawer includes collected icons corresponding to previously installed applications, and
wherein the icon corresponding to the specific application is displayed at a position within the application drawer.

5. The mobile terminal (100) as claimed in any one of claims 1 to 4, wherein the controller (180) is configured to display an application drawer for selecting a third position where the icon of the specific application is displayed in the application drawer upon reception of a touch input applied to the displayed icon of the specific application at the second position, and
wherein the application drawer includes collected icons corresponding to previously installed applications.

6. The mobile terminal (100) as claimed in any one of claims 1 to 5, wherein the controller (180) is configured to:
display the first screen (11) translucently, and
display the second screen (20) such that the second screen (20) and the first screen (11) overlap.

7. The mobile terminal (100) of claim 6, wherein the controller (180) is configured to restore the translucent first screen (11) to its original state upon selection of the first position.

8. The mobile terminal (100) as claimed in any one of claims 1 to 7, wherein the controller (180) is configured to display a virtual icon corresponding to the specific application that can be touched and dragged to the position of the icon of the specific application.

9. The mobile terminal (100) of claim 8, wherein the controller (180) is configured to
receive a touch input to an installation button for installing the specific application on the first screen (11), and
display the virtual icon as a position corresponding to the installation button on the second screen.

10. The mobile terminal (100) as claimed in any one of claims 1 to 9, wherein the controller (180) is configured to:
display a notification bar indicating an installation state of the specific application, and
display the second screen (20) upon reception of an input for installing the specific application.

11. A method of controlling a mobile terminal (100), the method comprising:
displaying, via a touchscreen (151) of the mobile terminal (100), a page including at least one application icon on a home screen, wherein the page is one of a plurality of pages that are selectively displayed on the home screen;
display, via the touchscreen (151), a first screen (11) of a market application for installing a specific application on the touchscreen;
receiving a first input for installing the specific application on the first screen (11);
displaying, via the touchscreen (151), a second screen (20) including a plurality of reduced screens each respectively corresponding to one of the plurality of pages, wherein the reduced screens are displayed by reducing the corresponding pages;
receiving a second input for selecting one of the reduced screens and selecting a first position on the selected reduced screen; and
displaying, via the touchscreen (151), an icon of the specific application at a second position on a page corresponding to the first position on the selected reduced screen after the specific application is installed on the touchscreen.

12. The method of claim 11, further comprising:
discriminately displaying icons corresponding to applications already installed and a free space for displaying the icon corresponding to the specific application to be installed on the second screen (20).

13. The method as claimed in any one of claims 11 to 12, further comprising:
displaying a progress bar indicating a download progress of an installation file of the specific application on the first screen (11); and
displaying the second screen (20) upon reception of an input applied to the progress bar.

## Patentansprüche

1. Tragbares Endgerät (100), das aufweist:
eine drahtlose Kommunikationseinheit (110), die konfiguriert ist, um eine drahtlose Kommunikation bereitzustellen;
einen Berührungsbildschirm (151), der konfiguriert ist, um eine Seite anzuzeigen, die wenigstens ein Anwendungspiktogramm auf einem Startbildschirm umfasst, wobei die Seite eine von mehreren Seiten ist, die wahlweise auf dem Startbildschirm angezeigt werden; und
eine Steuerung (180), die konfiguriert ist, um:
einen ersten Bildschirm (11) einer Marktanwendung zum Installieren einer spezifischen Anwendung auf dem Berührungsbildschirm (151) anzuzeigen,
eine erste Eingabe zum Installieren der spezifischen Anwendung auf dem ersten Bildschirm zu empfangen,
einen zweiten Bildschirm (20) mit mehreren verkleinerten Bildschirmen, die jeweils einer der mehreren Seiten entsprechen, anzuzeigen, wobei die verkleinerten Bildschirme durch Verkleinern der entsprechenden Seiten angezeigt werden,
eine zweite Eingabe zum Auswählen eines der verkleinerten Bildschirme und Auswählen einer ersten Position auf dem ausgewählten verkleinerten Bildschirm zu empfangen, und
ein Piktogramm (30) der spezifischen Anwendung in einer zweiten Position auf einer Seite, die der ersten Position auf dem ausgewählten verkleinerten Bildschirm entspricht, nachdem die spezifische Anwendung installiert ist, auf dem Berührungsbildschirm (151) anzuzeigen.

2. Mobiles Endgerät (100) nach Anspruch 1, wobei die Steuerung (180) konfiguriert ist, um Piktogramme, die bereits installierten Anwendungen entsprechen, und einen freien Raum zum Anzeigen des Piktogramms, das der spezifischen Anwendung, die installiert werden soll, entspricht, auf dem zweiten Bildschirm (20) unterschiedlich anzuzeigen.

3. Mobiles Endgerät (100) nach einem der Ansprüche 1 bis 2, wobei die Steuerung (180) konfiguriert ist, um:
einen Fortschrittsbalken, der einen Herunterladevorgang einer Installationsdatei der spezifischen Anwendung anzeigt, auf dem ersten Bildschirm anzuzeigen, und
den zweiten Bildschirm (20) nach Empfang einer auf den Fortschrittsbalken angewendeten Eingabe anzuzeigen.

4. Mobiles Endgerät (100) nach Anspruch 1, wobei die Steuerung (180) konfiguriert ist, um:
die verkleinerten Bildschirme in einem ersten Bereich des zweiten Bildschirms (20) anzuzeigen, und
wenigstens einen anderen verkleinerten Bildschirm, der wenigstens einer Anwendungsschublade entspricht, in einem zweiten Bereich des zweiten Bildschirms (20) anzuzeigen,
wobei die wenigstens eine Anwendungsschublade gesammelte Piktogramme umfasst, die früher installierten Anwendungen entsprechen, und
wobei das Piktogramm, das der spezifischen Anwendung entspricht, in einer Position innerhalb der Anwendungsschublade angezeigt wird.

5. Mobiles Endgerät (100) nach einem der Ansprüche 1 bis 4, wobei die Steuerung (180) konfiguriert ist, um eine Anwendungsschublade zum Auswählen einer dritten Position anzuzeigen, wobei das Piktogramm der spezifischen Anwendung nach dem Empfang einer Berührungseingabe, die auf das angezeigte Piktogramm der spezifischen Anwendung in der zweiten Position angewendet wird, in der Anwendungsschublade angezeigt wird,
wobei die Anwendungsschublade gesammelte Piktogramme umfasst, die früher installierten Anwendungen entsprechen.

6. Mobiles Endgerät (100) nach einem der Ansprüche 1 bis 5, wobei die Steuerung (180) ferner konfiguriert ist, um:
den ersten Bildschirm (11) durchscheinend anzuzeigen, und
den zweiten Bildschirm (20) derart anzuzeigen, dass der zweite Bildschirm (20) und der erste Bildschirm (11) überlappen.

7. Mobiles Endgerät (100) nach Anspruch 6, wobei die Steuerung (180) konfiguriert ist, um den durchscheinenden ersten Bildschirm (11) nach der Auswahl der ersten Position in seinem ursprünglichen Zustand wiederherzustellen.

8. Mobiles Endgerät (100) nach einem der Ansprüche 1 bis 7, wobei die Steuerung (180) konfiguriert ist, um ein virtuelles Piktogramm, das der spezifischen Anwendung entspricht, das berührt und zu der Position des Piktogramms der spezifischen Anwendung gezogen werden kann, anzuzeigen.

9. Mobiles Endgerät (100) nach Anspruch 8, wobei die Steuerung (180) konfiguriert ist, um
eine Berührungseingabe an einem Installationsknopf zum Installieren der spezifischen Anwendung auf dem ersten Bildschirm (11) zu empfangen, und
das virtuelle Piktogramm als eine Position, die dem Installationsknopf entspricht, auf dem zweiten Bildschirm anzuzeigen.

10. Mobiles Endgerät (100) nach einem der Ansprüche 1 bis 9, wobei die Steuerung (180) konfiguriert ist, um:
einen Benachrichtigungsbalken, der einen Installationszustand der spezifischen Anwendung angibt, anzuzeigen, und
den zweiten Bildschirm (20) nach dem Empfang einer Eingabe zum Installieren der spezifischen Anwendung anzuzeigen.

11. Verfahren zur Steuerung eines tragbaren Endgeräts (100), wobei das Verfahren aufweist:
Anzeigen einer Seite, die wenigstens ein Anwendungspiktogramm auf einem Startbildschirm umfasst, über einen Berührungsbildschirm (151) des mobilen Endgeräts (100), wobei die Seite eine von mehreren Seiten ist, die wahlweise auf dem Startbildschirm angezeigt werden;
Anzeigen eines ersten Bildschirms (11) einer Marktanwendung zum Installieren einer spezifischen Anwendung auf dem Berührungsbildschirm über den Berührungsbildschirm (151);
Empfangen einer ersten Eingabe zum Installieren der spezifischen Anwendung auf dem ersten Bildschirm (11);
Anzeigen eines zweiten Bildschirms (20) mit mehreren verkleinerten Bildschirmen, die jeweils einer der mehreren Seiten entsprechen, über den Berührungsbildschirm (151), wobei die verkleinerten Bildschirme durch Verkleinern der entsprechenden Seiten angezeigt werden;
Empfangen einer zweiten Eingabe zum Auswählen eines der verkleinerten Bildschirme und Auswählen einer ersten Position auf dem ausgewählten verkleinerten Bildschirm, und
Anzeigen eines Piktogramms der spezifischen Anwendung in einer zweiten Position auf einer Seite, die der ersten Position entspricht, auf dem ausgewählten verkleinerten Bildschirm über den Berührungsbildschirm (151) auf dem Bildschirm, nachdem die spezifische Anwendung installiert ist.

12. Verfahren nach Anspruch 11, das ferner aufweist:
unterschiedliches Anzeigen von Piktogrammen, die bereits installierten Anwendungen entsprechen, und eines freien Raums zum Anzeigen des Piktogramms, das der spezifischen Anwendung, die installiert werden soll, entspricht, auf dem zweiten Bildschirm (20).

13. Verfahren nach einem der Ansprüche 11 bis 12, das ferner aufweist:
Anzeigen eines Fortschrittsbalkens, der einen Herunterladevorgang einer Installationsdatei der spezifischen Anwendung anzeigt, auf dem ersten Bildschirm; und
Anzeigen des zweiten Bildschirms (20) nach Empfang einer auf den Fortschrittsbalken angewendeten Eingabe.

## Revendications

1. Terminal mobile (100), comprenant :
une unité de communication sans fil (110) configurée pour fournir une communication sans fil ;
un écran tactile (151) configuré pour afficher une page incluant au moins une icône d'application sur un écran d'accueil, dans lequel la page est l'une d'une pluralité de pages qui sont sélectivement affichées sur l'écran d'accueil ; et
un organe de commande (180) configuré pour :
afficher un premier écran (11) d'une application commerciale pour l'installation d'une application spécifique sur l'écran tactile (151),
recevoir une première entrée pour l'installation de l'application spécifique sur le premier écran,
afficher un second écran (20) incluant une pluralité d'écrans réduits, chacun d'eux correspondant respectivement à l'une de la pluralité de pages, dans lequel les écrans réduits sont affichés par la réduction des pages correspondantes,
recevoir une seconde entrée pour la sélection de l'un des écrans réduits et la sélection d'une première position sur l'écran réduit sélectionné, et
afficher une icône (30) de l'application spécifique à une deuxième position sur une page correspondant à la première position sur l'écran réduit sélectionné après l'installation de l'application spécifique sur l'écran tactile (151).

2. Terminal mobile (100) selon la revendication 1, dans lequel l'organe de commande (180) est configuré pour afficher de manière différenciée des icônes correspondant à des applications déjà installées, et un espace libre pour l'affichage de l'icône correspondant à l'application spécifique à installer sur le second écran (20).

3. Terminal mobile (100) selon la revendication 1 ou 2, dans lequel l'organe de commande (180) est configuré pour :
afficher une barre de progression indiquant une progression de téléchargement d'un fichier d'installation de l'application spécifique sur le premier écran (11), et
afficher le second écran (20) à la réception d'une entrée appliquée à la barre de progression.

4. Terminal mobile (100) selon la revendication 1, dans lequel l'organe de commande (180) est configuré pour :
afficher les écrans réduits dans une première zone du second écran (20), et
afficher au moins un autre écran réduit correspondant à au moins un tiroir d'application dans une seconde zone du second écran (20),
dans lequel l'au moins un tiroir d'application inclut des icônes collectées correspondant à des applications précédemment installées, et
dans lequel l'icône correspondant à l'application spécifique est affichée à une position à l'intérieur du tiroir d'application.

5. Terminal mobile (100) selon l'une quelconque des revendications 1 à 4, dans lequel l'organe de commande (180) est configuré pour afficher un tiroir d'application permettant la sélection d'une troisième position à laquelle l'icône de l'application spécifique est affichée dans le tiroir d'application à la réception d'une entrée tactile appliquée à l'icône affichée de l'application spécifique à la deuxième position, et dans lequel le tiroir d'application inclut des icônes collectées correspondant à des applications précédemment installées.

6. Terminal mobile (100) selon l'une quelconque des revendications 1 à 5, dans lequel l'organe de commande (180) est configuré pour :
afficher le premier écran (11) de manière translucide, et
afficher le second écran (20) de sorte que le second écran (20) et le premier écran (11) se chevauchent.

7. Terminal mobile (100) selon la revendication 6, dans lequel l'organe de commande (180) est configuré pour rétablir le premier écran translucide (11) à son état initial à la sélection de la première position.

8. Terminal mobile (100) selon l'une quelconque des revendications 1 à 7, dans lequel l'organe de commande (180) est configuré pour afficher une icône virtuelle correspondant à l'application spécifique qui peut être touchée et glissée à la position de l'icône de l'application spécifique.

9. Terminal mobile (100) selon la revendication 8, dans lequel l'organe de commande (180) est configuré pour
recevoir une entrée tactile sur un bouton d'installation pour l'installation de l'application spécifique sur le premier écran (11), et
afficher l'icône virtuelle en tant qu'une position correspondant au bouton d'installation sur le second écran.

10. Terminal mobile (100) selon l'une quelconque des revendications 1 à 9, dans lequel l'organe de commande (180) est configuré pour :
afficher une barre de notification indiquant un état d'installation de l'application spécifique, et
afficher le second écran (20) à la réception d'une entrée pour l'installation de l'application spécifique.

11. Procédé de commande d'un terminal mobile (100), le procédé comprenant :
l'affichage, par l'intermédiaire d'un écran tactile (151) du terminal mobile (100), d'une page incluant au moins une icône d'application sur un écran d'accueil, dans lequel la page est l'une d'une pluralité de pages qui sont sélectivement affichées sur l'écran d'accueil ;
l'affichage, par l'intermédiaire de l'écran tactile (151), d'un premier écran (11) d'une application commerciale pour l'installation d'une application spécifique sur l'écran tactile ;
la réception d'une première entrée pour l'installation de l'application spécifique sur le premier écran (11) ;
l'affichage, par l'intermédiaire de l'écran tactile (151), d'un second écran (20) incluant une pluralité d'écrans réduits, chacun d'eux correspondant respectivement à l'une de la pluralité de pages, dans lequel les écrans réduits sont affichés par la réduction des pages correspondantes ;
la réception d'une seconde entrée pour la sélection de l'un des écrans réduits et la sélection d'une première position sur l'écran réduit sélectionné ; et
l'affichage, par l'intermédiaire de l'écran tactile (151), d'une icône de l'application spécifique à une deuxième position sur une page correspondant à la première position sur l'écran réduit sélectionné après l'installation de l'application spécifique sur l'écran tactile.

12. Procédé selon la revendication 11, comprenant en outre :
l'affichage de manière différenciée des icônes correspondant à des applications déjà installées et d'un espace libre pour l'affichage de l'icône correspondant à l'application spécifique à installer sur le second écran (20).

13. Procédé selon la revendication 11 ou 12, comprenant en outre :
l'affichage d'une barre de progression indiquant une progression de téléchargement d'un fichier d'installation de l'application spécifique sur le premier écran (11) ; et
l'affichage du second écran (20) à la réception d'une entrée appliquée à la barre de progression.
